# EUROPEAN PATENT APPLICATION

(11) **EP 3 311 656 A1**
(43) Date of publication of application: **25.04.2018**
(21) Application number: 16194939.1
(22) Date of filing: 20.10.2016
(51) Int. Cl.: A01G 31/04, A01G 7/04

(54) **A METHOD FOR AFFECTING PLANT GROWTH AND A PLANT GROWING SYSTEM**

(71) Applicant: InFarm - Indoor Urban Farming GmbH, 10999 Berlin (DE)
(72) Inventor: GALONSKA, Guy, 10999 Berlin (DE); GALONSKA, Erez, 10999 Berlin (DE); KALAITZOGLOU, Pavlos, 10999 Berlin (DE)
(74) Representative: adares Patent- und Rechtsanwälte Reininger & Partner GmbB

(57) **Abstract**

The invention relates to a method for affecting plant growth, comprising the steps of irradiating plants (P) during a lighting period having a start period and an end period using light beams (LB) emitted by a lighting device (2) having a plurality of LED (light emitting diode) lamps (21) emitting plant sensitive emission wavelength ranges and having separately adjustable emission intensity, increasing the emission intensity stepwise and/or continuously during the start period, and decreasing the emission intensity stepwise and/or continuously during the end period. According to the invention relative to each other said lighting device (2) and the plants (P) are moved in an at least in part rotary movement while the plants (P) are illuminated. Furthermore, the invention relates to a plant growing system for affecting plant growth by light, comprising: a plant holding device (1), and a lighting device (2) having a plurality of LED (light emitting diode) lamps (21) emitting plant sensitive emission wavelength ranges and having separately adjustable emission intensities, wherein said lighting device (2) is arranged and adapted to move in an at least in part rotary movement on top of said plant holding device (1).

## Description

The invention is related to a method for affecting plant growth and to a plant growing system. Especially, the invention is related to a method for affecting plant growth, comprising steps of irradiating plants during a lighting period having a start period and an end period using light beams emitted by a lighting device having a plurality of LED (light emitting diode) lamps emitting plant sensitive emission wavelength ranges and having separately adjustable emission intensity, increasing the emission intensity stepwise and/or continuously during the start period and decreasing the emission intensity stepwise and/or continuously during the end period. And the invention is related to a corresponding plant growing device suitable to perform the aforementioned method. Such a method and such a device are described in DE202011102688U1. However, there is a remaining demand for positively affecting plant growth by artificial lighting. Furthermore, there is a constant need to further reduce energy consumption caused by the artificial lighting during plant growth.

It is an object of the present invention to provide a method for affecting plant growth and a plant growth system leading to enhanced plant growth at lower energy consumption.

This object is solved by a method having the features according to claim 1 and by a system having the features according to claim 10. Preferred embodiments both for the method and the system are described by subject matter of the subclaims.

According to the invention relative to each other the lighting device and the plants are moved in an at least in part rotary movement while the plants are illuminated. This means that the lighting device and/or the plants are moved relative to each other in such a way that a relative movement comprising a rotation movement is performed. Preferably the lighting device is performing a pure rotary movement above the plants.

Plants obtained by said inventive method have at least one of an increased ascorbic acid concentration, an increased fructose concentration, an increased glucose concentration and an increased concentration of secondary metabolites like flavonoids and glucosinolates while obtaining an enhanced yield (fresh weight) compared to plants irradiated without an at least in part rotary movement of the lighting device. Furthermore, energy consumption can be reduced compared to a method without an at least in part rotary relative movement of the lighting device and the plants. The number of LED lamps can be reduced compared to the number of LED lamps of static lighting systems that must cover all plants during plant irradiation. Thereby, the inventive method is more cost-efficient compared to conventional LED plant growth lighting methods.

Said at least in part rotary movement is a pure rotary movement or a superposition of a rotary movement with one or more translatory movements. Preferably, the at least in part rotary movement is a pure or substantially pure rotary movement. More preferably, the at least in part rotary movement is made by rotating said lighting device around a rotational axis. Starting from said rotational axis said lighting device has LED lamps being arranged radially. Preferably, the LED lamps are arranged radially along a plurality of radial axes. It is advantageous if two of these radial axes are arranged collinearly.

According to the invention plant sensitive emission wavelength ranges are preferably blue, green, orange, yellow, red, infrared and / or ultraviolet wavelength ranges. In literature this spectrum of plant sensitive wavelengths is called UV/VIS-spectrum. All of these emission wavelength ranges can affect plants in a different manner that is described in the following. The light intensity can be varied between 0 and 100%, that is, the LED lamps can be adjusted to any emission intensity in the range between complete deactivation and full activation.

The method involves a step of irradiating plants during a lighting period having a start period and an end period, wherein said emission intensity is increased stepwise and/or continuously during said start period and decreased stepwise and/or continuously during the end period. Preferably, the method comprises in addition to said lighting period a dark period. During the dark period, the plants are usually not irradiated by said lighting device. However, there may be dark period interruptions depending on plant species and growing goals. The method comprises a step of deactivating all of the LED lamps at the beginning of said dark period. The at least in part rotary movement of lighting device may be continued during the dark period. This movement causes an airflow, the intensity of which depends on the rotation speed and can move the plants in order to simulate more natural growing conditions by imitating wind. Preferably, the lighting period and the dark period are set in an alternating sequence, and a lighting period may typically take 12 to 20h and a dark period 4 to 12h. Preferably, said lighting period comprises said start period, said end period, and an intermediate period which lies between said start period and said end period and in which the emission intensity is kept at an emission intensity last set during start period without alteration. Preferably, the adjustment of said emission intensities of said start and end periods are chosen to be symmetric to each other. Preferably, said start period or end period takes 1 to 7h, respectively. Preferably, lighting periods of different LED lamps are adjusted independent from each other. More preferably, lighting periods of LED lamps emitting different emission wavelengths are adjusted independent from each other.

In a preferred embodiment said lighting device is moved with a rotation speed of 0,25 to 5,0 full rotations/min, preferably, 0,5 to 3,0 full rotations/min, more preferably 0,75 to 1,5 full rotations/min. This rotation speed is efficient to affect plant growth positively what has been proofed in a first set of experiments.

Preferably, said different emission wavelength ranges are realized by different types of LEDs and/or by wavelength tunable LEDs. When said different emission wavelength ranges are realized by different types of LEDs, said different types of LEDs can be mounted and dismounted alone ore in combination manually from said lighting device depending on the emission wavelength range recipe needed. Tunable LEDS can be adjusted to the respective emission wavelength range that is needed. Preferably, the emission intensity of each LED is adjusted and can be controlled separately.

Preferably said emission wavelength ranges of said LED lamps are selected depending on a growing stage of a respective plant to be irradiated. According to this invention growing stages of plants are be classified by the so called BBCH scale (BBCH officially stands for "Biologische Bundesanstalt, Bundessortenamt und CHemische Industrie").

In a preferred embodiment said different emission wavelength ranges of said light beams are selected from wavelength ranges of blue light, red light, green light, far red light and/or ultraviolet light (UV/VIS-spectrum). According to this invention blue wavelengths lie in the range of 400 and 499 nm. Green wavelengths lie in the range of 500 to 599 nm. Red wavelengths lie in the range of 600 to 700 nm. Far red wavelengths lie in the range of 701 to 800 nm. For plant growing in case of this invention the ultraviolet wavelength range goes from 300 to 399 nm.

Ultra-violet (UV) and blue radiations are perceived by plants through several photoreceptors. They regulate a large range of processes throughout plant life. Along with red radiations, they are involved in diverse photomorphogenic responses, e.g., seedling development, branching or flowering.

A higher absolute level or a higher level relative to the total irradiance amount of light beams having blue emission wavelengths stimulate sun-type characteristics on the leaf level even at a relatively low emission intensity, similar to those induced by relatively high emission intensity, where photosynthesis increases proportionally with leaf mass per leaf area and N-(nitrogen-) content per unit leaf area, and chl (chlorophyll):N decreases. Furthermore, on plant level, blue light inhibits stem elongation via a complex response involving several photoreceptors (cry1, cry2, phot1, phyA, phyB), and leading to more compact plant morphology. Moreover, blue light induces most of the phototropic responses of plants. Blue-light responses proceed at maximal rates for several minutes after the application of a blue light pulse of a few seconds. This can be explained by the property of the physiologically inactive form of blue light photoreceptor that is converted to its active form by blue light. The active form is reverting slowly to the physiologically inactive form in the absence of blue light. Overall, varying the blue light fraction offers the possibility to manipulate leaf and plant properties under a low irradiance such that they would normally be associated with high irradiances.

The relative spectral amount of red compared to the far-red radiation of daylight is considered to be the most important signaling factor in shade avoidance responses. When grown under low red/far red ratio (e.g., under vegetation canopies), plants respond by increased petiole length, reduced branching and most important, increased stem elongation rate and therefore increased stem dry weight. Varying the red/far red ratio of radiation in a background of natural daylight irradiance offers the possibility to induce shade avoiding plant responses, leading to increased light absorption and biomass production.

Exposure to UV-rich radiation leads to generation of free radicals that damage DNA, proteins, lipids, chloroplasts and photosynthetic pigments, but applied at lower level and during specific and short periods in plant lighting, UV radiations enhance plant resistance to pathogens and herbivores. When plants are exposed to UV-B radiations, chl content decreases due to high decrease in chlorophyll a content and, consequently, in chl a/b ratio. UV-B either stimulates stomatal opening or stomatal closing and neither of these responses is readily reversible. These responses depend on the metabolic state of guard cells. Exposure to UV also modifies plant growth. Morphological plant responses to UV-B exposure are also species-dependent. In numerous species, UV-B exposure decreases shoot length, shoot dry mass and leaf area. In some other species, exposure to supplementary UV-B light significantly increases leaf area as well as fresh and dry biomass. Exposure to UV-A without UV-B radiation decreases plant height and leaf area. Even if the effects of UV-B on branching vary in range according to species, UV-B exposure tends to increase the number of stems/ tiller. Whereas the effects of UV-B on flowering induction, precocity and duration depend on species, plant exposure to UV-B can increase flower size.

UV, and blue radiations to a lesser extent, can induce the production of secondary metabolites or mechanisms of resistance to pathogens or herbivores that confer interesting qualities to plants exposed to these radiations.

UV-B causes DNA damage and generates reactive oxygen species against which plants need to protect themselves. Protection involves perception and signal transduction through photo- receptor UVR8. UV-B perception by this photoreceptor induces its activation through its monomerization. In its active form, UVR8 binds to COP1, causing stabilization and accumulation of COP1 in the nucleus. This UV-B-dependent interaction between UVR8 and COP1 then leads to HY5 activation and stabilization. HY5 in turn is believed to promote the expression of several genes involved in UV-B protection such as flavonoid synthesis and chalcone synthase genes, as well as genes involved in DNA repair such as photolyase genes. Further, cry1 perceives UV-A-besides blue light-, and also promotes flavonoid synthesis under high irradiance through HY5. Plant exposure to solar UV-B radiation tends to increase resistance to both herbivorous insects and microbial pathogens. Moreover, UV-B induces flavonoid accumulation controlled by UVR8 and flavonoids increase plant defense against herbivorous insects. In order to protect cells and prevent damage by UV radiations, plants accumulate UV-absorbing compounds in their cell epidermis. Accumulation of flavonoids, suspected to offer UV protection is induced by UV-B at least for several species.

Preferably, the higher said growing stage of a plant, the higher is an amount of red light emission wavelength range of said light beam and the lower is an amount of blue light emission wavelength range of said light beam.

For example, a plant of a comparably high growing stage is irradiated with light beams having different light wavelength ranges, in particular with the following composition: an amount of 40 to 60 % of a spectral irradiance in the red emission wavelength range, an amount of 20 to 43 % of spectral irradiance in the blue emission wavelength range, an amount 10 to 17 % of spectral irradiance in the green emission wavelength range and an amount of 0,5 to 15% of spectral irradiance in the ultraviolet wavelength range, whereas a plant of comparably low growing stage is irradiated with light beams having a wavelength range with an amount of 70 to 82 % of a spectral irradiance in the red emission wavelength range, an amount of 1 to 18 % of a spectral irradiance in the blue emission wavelength range, an amount of 12 to 17 % of a spectral irradiance in the green emission wavelength range and no spectral irradiance in the ultraviolet wavelength range. Plants having a plant growing stage between the afore-mentioned high plant growing stage and the afore-mentioned low growing stage are irradiated by visible emission wavelength ranges having amount of red emission wavelength and blue emission wavelength between the afore-mentioned wavelength ranges, whereas the amount of green wavelength is not changed. That is, in relation to plant irradiation with visible emission wavelength ranges, the amount of red emission wavelength is changed from a spectral irradiance of 70 to 82 % to 40 to 60 % from a low plant growing stage to a high plant growing stage and the amount of blue emission wavelength is changed from a spectral irradiance of 1 to 18 % to 20 to 43 % from a low plant growing stage to a high plant growing stage, whereas the amount of green emission wavelength remains unchanged, i.e., a spectral irradiance of 10 to 17% during plant growth from a low plant growing stage to a high plant growing stage. Preferably, irrespective of the plant growing stage all plants are irradiated with far red emission wavelength with a spectral irradiance in the spectral irradiance range of 0,5 to 15%. Preferably, only plants of relatively high plant growing stages are irradiated by ultraviolet wavelength.

In a preferred embodiment of the method said plants are moved along determined plant growing trajectories during the according plant growing cycle, the plant growing trajectories showing different plant growing stage sections, wherein LED lamps passing above these specific growing stage sections are emitting emission wavelength ranges selected depending on the growing stage of the plants in the growing stage sections. So, it is not necessary to tune tunable LEDs or exchange set LED combinations depending on the plant growing stage. By the combination of plant movement along the plant growing trajectories with spatially distributed LED lamp combinations in the moving lighting device those emission wavelength ranges that are needed at a respective growing stage of the respective plant are provided.

Furthermore, the method preferably comprises a step using an airflow device to blow a plant-airflow on at least some of said plants causing a plant movement by said plant-airflow. Preferably, a step of blowing a plant-airflow is performed during said lighting period. By moving said plants during said lighting period, the artificial irradiation can reach parts of said plants which are overshadowed by other plant parts of the same plant or by parts of a neighboring plant.

In a preferred embodiment the method comprises a step of using an airflow device to blow a lighting-device-airflow on said lighting device for generating or supporting said at least in part rotary movement of said lighting device. Thereby, a separate motor for driving the movement of the lighting device is not needed. Preferably, the plant-airflow and the lighting-device-airflow are produced by a common airflow device. Thereby, energy consumption and costs can be further reduced.

Furthermore, the invention is related to a plant growing system for affecting plant growth by light, comprising:
- a plant holding device, and
- a lighting device having a plurality of LED (light emitting diode) lamps emitting plant sensitive emission wavelength ranges and having separately adjustable emission intensities, wherein said lighting device is arranged and adapted to move in an at least in part rotary movement on top of said plant holding device and wherein the lighting device is having LED lamps showing different emission wavelength ranges.

Plants grown using such a plant growing device have at least one of an increased ascorbic acid concentration, an increased fructose concentration, an increased glucose concentration and an increased concentration of secondary metabolites like flavonoids and glucosinolates compared to plants being illuminated in a static environment. Furthermore, an equal or enhanced yield compared to plants irradiated without an at least in part rotary movement of the lighting device is obtained. By making use of the lighting device's movement compared to a static environment the number of LED lamps needed is reduced and thereby overall energy consumption per plant consumed is significantly lower even when energy consumption levels for the remaining LED lamps and for their movement is taken into account. Thereby, such a plant growing system is more cost-efficient.

Preferably, said LED lamps contain different types of LEDs and/or by wavelength tunable LEDs to provide different emission wavelength ranges. In a preferred embodiment said different emission wavelength ranges are provided by different types of LEDs. Each LED lamp has a plurality of LEDs being adapted to emit a predetermined emission wavelength range. The higher said growing stage of a plant the higher is a level of LED spectral irradiance in red light emission wavelength ranges and the lower is a level of LED spectral irradiance in blue light emission wavelength ranges in an LED lamp of the lighting device that is moved in an at least in part rotational movement above said plants for illumination. For example, a LED lamp having a level of LED spectral irradiance adapted for emission of red emission wavelength ranges from 40 to 60 %, a level of LED spectral irradiance in blue emission wavelength ranges from 20 to 43 %, and a level of LED spectral irradiance in green emission wavelength ranges from 10 to 17 %, as well as some LEDs adapted for emission of a far red wavelength range and some LEDs adapted for emission of an ultraviolet wavelength range are moved above of a plant of a comparably high growing stage to be irradiated with light beams. A spectral irradiance of UV wavelengths in the range of 5 to 15% will lead to the induction of secondary metabolites and other photomorphogenic plant processes if required.

Whereas a LED lamp having a level of LED spectral irradiance in red emission wavelength ranges from 70 to 82 %, a level of LED spectral irradiance in blue emission wavelength ranges from 1 to 18 %, and a level of LED spectral irradiance in green emission wavelength ranges from 12 to 17 % and some LEDs for emission of far red wavelength ranges are placed on top of plant of comparably low growing stage. Preferably, irrespective of the plant growing stage all LED lamps have LEDs adapted for emission of far red emission wavelength ranges. Alternatively or additionally to different kinds of LEDs having defined wavelength emission spectra, each LED lamp can contain one or several tunable LED that may emit different controllable wavelength emission spectra ranges.

In a preferred embodiment said LED lamps are attached in a manually mountable and dismountable manner to the lighting device. Thereby, LED lamps providing different light recipes (%combinations of wavelength ranges) can be exchanged in case of need. This is a cost-efficient approach to adapt the system to the need of different plant varieties having different lighting needs during plant growth. In another embodiment said different emission wavelength ranges are provided by wavelength tunable LEDs.

Preferably, said lighting device is movable around a rotational axis around seen from this rotational axis said LED lamps are arranged radially. The radial arrangement is advantageously done in a linear manner. Preferably said rotational axis is the center of linearly arranged LED lamps. This construction is adapted to a rotational movement. In a preferred embodiment said lighting device is adapted to move with a rotation speed of 0,25 to 5,0 full rotations/min, preferably, 0,5 to 3,0 full rotations/min, more preferably 0,75 to 1,5 full rotations/min. This rotation speed is chosen to ensure a proper irradiation of said plants during lighting period.

In a preferred embodiment the plant holding device has plant holding elements each adapted to receive one or several plants, wherein the plant holding elements are movable by the plant growing system along plant growing trajectories during a plant growing cycle by a rotation movement around a rotational axis of said plant holding device. Said plant holding device can have any shape and dimension. Preferably, said plant holding device has a shape of a rectangular plate. More preferably, said plant holding device is disc shaped. Preferably, said rotational axis of said lighting device is arranged on top of said rotational axis of said plant holding device.

For example, the plant holding device has a first guidance panel having a first guidance panel center and first guidance panel slots extending within said first guidance panel from an area adjacent to the first guidance panel center in an outward direction, a further guidance panel with a further guidance panel center and further guidance panel slots providing guiding tracks for a multitude of plant holding elements. Said first guidance panel with said first guidance panel center and said further guidance panel with said further guidance panel center are coaxially arranged and adapted on top of each other to provide a rotation movement between each other around a common rotation axis. Plant openings for said plant holding elements are formed at intersections of said first guidance panel slots with said further guidance panel slots. Furthermore, according to a first principle said plant openings are distributed in a spiral-like pattern around said rotation axis showing a sense of rotation, wherein in said sense of rotation of said spiral-like pattern several or all spiral-adjacent plant openings are arranged at a plant opening angle with respect to said rotation axis. As an alternative according to a second principle said plant openings are distributed in several circle-like patterns coaxially to said rotation axis, wherein on the same circle-like pattern several or all circle-adjacent plant openings are arranged at a plant opening angle with respect to said rotation axis. Preferably, said first guidance panel slots do have a first curvature and referring back to the first principle said further guidance panel slots are formed in a continuous spiral-like shape or alternatively referring back to the second principle said further guidance panel slots are formed as curved slots having a further curvature that extends within said further guidance panel from an area adjacent to the further guidance panel center in an outward direction, wherein said further curvature is opposite to said first curvature of said first guidance panel slots. Preferably, said first guidance panel slots and said further guidance panel slots are curved such that between said spiral-adjacent or between said circle-adjacent plant openings a radially-adjacent plant opening is located in a radially outward direction on a bisecting line of said plant's opening angle or deviating at an angle of less than 10 degrees, more preferably less than 8 degrees and even more preferably less than 6 degrees from said bisecting line. Preferably, said first guidance panel is formed in a disc shape that is arranged and adapted to rotate around said rotation axis, wherein said further guidance panel is fastened in relation to said rotation axis.

In a preferred embodiment, said plant holding device is or especially said first guidance panel and said further guidance panel are arranged on top of a container. Said container is adapted to accommodate plant roots that are controlled by said plant growing system and adapted to provide said plant roots with plant nutrients and/or water. Preferably, said container is adapted and arranged as a hydroponic and/or aeroponic plant growing device. Further, said container according to the first principle shows preferably a spiral-like channel structure with channel walls starting from a center area of said channel structure or according to the second principle shows preferably a channel structure with several curved channels extending from a center area of said channel structure in an outward direction and being separated from each other by channel walls. More preferably, said channel structure shows an incline going upwards in a direction towards said center area of said channel structure. Preferably, said container comprises a control sensor device detecting parameters from the group consisting of temperature inside and outside said container, pH-value, plant fertilizer concentration and water level. Alternatively or additionally, said control sensor device is adapted to control said temperature inside said container, said pH-value, said plant fertilizer concentration and said water level.

Preferably, the LED lamps show a plant sensitive emission spectrum changing radially according to a plant growing cycle following the plant growing trajectories. Thereby, said lighting device and said plant holding devices are both adapted to respective plant growing stage of said plants.

In a preferred embodiment said lighting device comprises at least one sensor selected from the group consisting of temperature sensor, humidity sensor, camera and/or ultrasonic sensor. The sensor is adapted to monitor plant situation so that, if needed, adaptations and / or changes to the plant growing system can be made to provide optimized conditions for plant growth. A camera is adapted to monitor plant growth and plant changes. An ultrasonic sensor is adapted to monitor plant volume.

Preferably, said plant growing system comprises a ventilation system and/or fan. Said ventilation system and/or fan are preferably respectively adapted to blow airflow to said lighting device to move said lighting device and / or said plants to move said plants. Thus, the plant growing system is adapted to provide for said plants a more natural environment when arranged inside a building.

Several embodiments of the plant transportation device are shown in the figures and are described in the following.
- Fig. 1: shows a schematic representation of a first embodiment of an inventive plant growing system;
- Fig. 2: shows a schematic representation of another embodiment of an inventive plant growing system;
- Fig. 3: shows a schematic representation of a LED lamp of a lighting device;
- Fig. 4: shows a schematic representation of another inventive plant growing system; and
- Fig. 5: shows a perspective view of the plant growing system shown in Fig. 4.

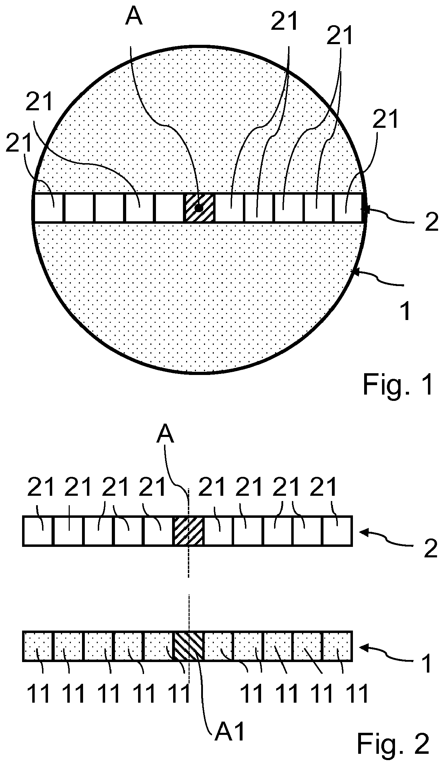

Fig. 1 is a schematic representation of a first embodiment of an inventive plant growing system, more particular a plan view of said inventive plant growing system. The plant growing system comprises a plant holding device 1, and a lighting device 2. The lighting device 2 comprises a plurality of LED (light emitting diode) lamps 21 adapted to emit plant sensitive emission wavelength ranges and having separately adjustable emission intensities. As a mere example, the lighting device has ten LED lamps 21, however, the number of LED lamps can be a differing one. Said lighting device 2 is movable around a rotational axis A around which said LED lamps 21 are arranged radially in a linear manner so that said rotational axis A is the center of the linearly arranged LED lamps 21. Said plant holding device 1 is disc-shaped. Not only the shape but also dimensions of said lighting device 2 and said plant holding device are adapted to each other. Said lighting device 2 is arranged and adapted to move in rotary movement on top of said plant holding device 1. Plants (not shown) are held by the plant holding device 1.

In operation the lighting device 2 irradiates said plants (not shown) during a lighting period having a start period and an end period using light beams (not shown) emitted by said LED lamps 21 emitting plant sensitive emission wavelength ranges, when activated, and having separately adjustable emission intensity. Further, said lighting device 2 is moved in said rotary movement during said lighting period. During the start period an emission intensity of a LED lamp 21 is increased stepwise and/or continuously and decreases stepwise and/or continuously during the end period.

Fig. 2 is a schematic representation of another inventive plant growing system, in particular a side view of said inventive plant growing system. The plant growing system comprises a plant holding device 1, and a lighting device 2. Said lighting device 2 corresponds to said lighting device 2 shown in Fig. 1. Said plant holding device 1 comprises a plurality of plant holding elements 11, the number of which is shown in Fig. 2 as a pure example. Furthermore, said plant holding device has a further rotational axis A1 being arranged in center of said plant holding device 1. Said lighting device 2 is arranged and adapted to move in a rotary movement on top of said plant holding device 1 which is adapted to move in another rotary movement. Plants (not shown) are held by the plant holding device 1.

In operation said lighting device 2 irradiates said plants (not shown) during a lighting period having a start period and an end period using light beams (not shown) emitted by said LED lamps 21 emitting plant sensitive emission wavelength ranges, when activated, and having separately adjustable emission intensity. Furthermore, said lighting device 2 is moved in a rotary movement during said lighting period. During the start period an emission intensity of a LED lamp 21 is increased stepwise and/or continuously and decreases stepwise and/or continuously during the end period. Furthermore, said plant holding device 1 is moved at least temporarily in a further rotary movement which has a different rotatory speed compared to the rotary movement of the lighting device in order to move said plants radially to positions in said plant holding device that depend on their respective plant growing stages.

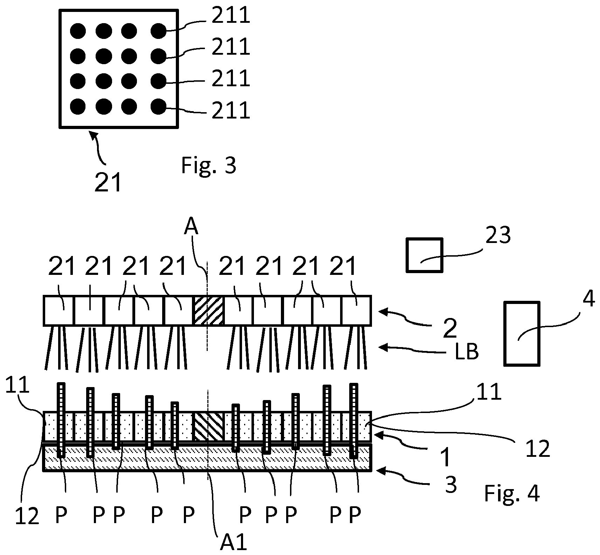

Fig. 3 is a schematic representation of a LED lamp of a lighting device and a top view on such an LED lamp. Said LED lamp 21 of said lighting device 2 has for example sixteen LEDs 211 arranged in 4x4 rows. Said LEDs 211 are each adapted to emit a predetermined emission wavelength selected respectively from blue, red, green, and far red emission wavelength.

Fig. 4 is a schematic representation of another inventive plant growing system and in particular a side view of said plant growing system. The plant growing system shown in Fig. 3 corresponds to the plant growing system shown in Fig. 2 but comprises an additional container 3 being arranged underneath the plant holding device 1. Said container 3 is adapted to accommodate plant roots of plants P that are schematically shown. Said container 3 is controlled by said plant growing system and adapted to provide said plant roots with plant nutrients (not shown) and/or water (not shown). Thereby, a hydroponic plant growing system is provided. In operation, said LED lamps 21 of said lighting device 2 emit light beams LB as schematically shown onto plants P. Plants P are arranged in said plant holding elements 11 of said plant holding device 1. A sensor device 23 is measuring parameters like temperature, humidity, plant size etc. Furthermore, an airflow device 4 may be provided in order to create an airflow forcing the plants P to move and thereby simulating outdoor conditions for plant growth and improving the distribution of light on all surface areas of the plants.

The plant holding elements 11 are movable in such a way that plants P are moved during their growth period from the center of the plant holding device to an outer edge 12 of said plant holding device 1. How such a movement can be achieved is explained in the following.

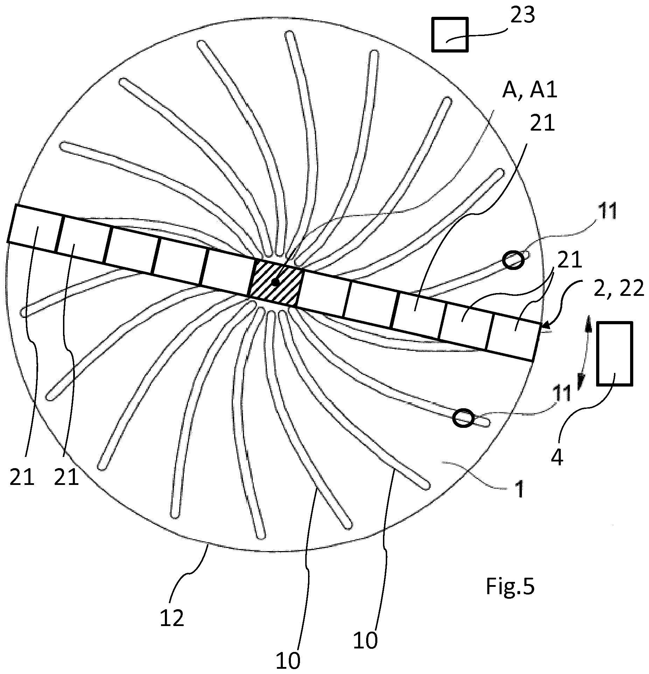

Fig. 5 is showing a perspective view of the plant growing system shown in Fig. 4. In this view said container is covered by said plant holding device 1 and is therefore not visible. The plant holding device 1 comprises a flat disc-shaped first guidance panel having a rotation axis (not shown) running through the center, the rotation axis being oriented perpendicular to the plane that is defined by the flat disc-shaped first guidance panel. In said plant holding device 1 a plurality of plant holding elements 11 may run along plant growing trajectories 10 in the form of first guidance panel slots are evenly distributed on the disc-shaped structure. These plant growing trajectories 10 are all identical showing the same curvature and each extend from an area being adjacent to the first guidance panel center in the direction of the first guidance panel's circumference. Said plant holding device 1 is driven by a driving member (not shown) forcing plants (not shown) held inside the plant holding elements 11 more and more from the center of the flat disc shaped first guidance panel to its circumference. Thereby, plants having an early growing stage are moved nearer to said outer edge 12 when achieving elder growing stages. In operation, the lighting device 2 is moved in a rotary movement about the rotational axis A during irradiation of said plants during a lighting period. The lighting device 2 comprises ten LED lamps 21 that are arranged radially from the rotation axis A in a symmetric linear manner so that said rotational axis A is the center of the linearly arranged LED lamps 21. Each LED lamp 21 comprises a plurality of LEDs (not shown) each emitting an individually predetermined emission wavelength range. Regarded from an outer edge 22 of the lighting device 2 in the direction of the rotational axis A the LED lamps 21 have LEDs (not shown) adapted to emit the following emission wavelength ranges. The fractions of spectral irradiances are distributed as follows:
Outer edge /
first LED lamp 21: red (amount: 50%), blue (amount: 35%), green (amount: 14%), ultraviolet and far red (each 0,5%)
second LED lamp 21: red (amount: 70 %), blue (amount: 15 %), green (amount: 14%), far red (1%)
third LED lamp 21: red (amount: 75%), blue (amount: 10%), green (amount: 14%), far red (1%)
third LED lamp 21: red (amount: 75%), blue (amount: 10%), green (amount: 14%), far red (1%)
fourth LED lamp 21: red (amount: 75%), blue (amount: 10%), green (amount: 14%), far red (1%)
fifth LED lamp 21: red (amount: 80%), blue (amount: 5%), green (amount: 14%), far red (1%)

The invention is further described by the following example and comparative example.

### Comparative example

47 Salanova lettuce plants were implanted in a square plant holding device of 66cm (length) x 66cm (width) x 50cm (height) having 49 plant holding openings in a regular 7x7 array after a pre-treatment to germinate.
The pre-treatment for germination was performed as follows: Seeds were germinated in Rockwool ® (trademark of Rockwool International A/S) for ten days under an irradiance of 100 µmol m⁻² s⁻¹ LED light. The humidity level was kept at about 90% and the temperature at about 25 °C. That means that the plants were all equal in growth and development when they were transferred into the square plant holding device. The plant selection before the transfer was random.

Each plant was contained in a plant holding element put into one of the plant holding openings. The climate conditions for plant growing were as follows: The air temperature was held between 18 to 24°C, water temperature of water supplied to the seeds or plants, respectively, was held between 18 to 21 °C, and relative humidity was 70 to 80%. A static lighting device was arranged above the plant holding device in a distance of 40 cm. The lighting device had two LED lamps spaced apart by 31 cm. They both received a power level of 50%' of their maximum wattage operation each providing an irradiance of 52 µmol m⁻² s⁻¹ of a defined spectrum. During each day the plant lighting phase was 16 hours and the dark phase 8 hours

21 days after implanting of the seeds, the plants have had a yield in form of a total fresh weight of 230 g.

### Example

47 Salanova lettuce plants were implanted after a pre-treatment to geminate in a square plant holding device of 66cm (length) x 66cm (width) x 50cm (height) having 49 plant holding openings in a regular 7x7 array. Each plant was contained in a plant holding element put in each of the plant holding openings. The pre-treating procedure and conditions have been identical to those of the comparative example.

The climate conditions for plant growing were as follows: The air temperature was held between 18 to 24°C, water temperature of water supplied to the seeds or plants, respectively, was held between 18 to 21°C, and relative humidity was 70 to 80%. A rotating lighting device was arranged above the plant holding device at a distance of 40 cm. The lighting device was adapted to rotate around a vertical rotational axis and had one LED lamp having a power level of 100% providing an irradiance of 105 µmol m⁻² s⁻¹. During each day the plant lighting phase was 16 hours and the dark phase 8 hours. During the plant lighting phase the lighting device was constantly moved in a rotary movement with a constant rotation speed of 1,0 full rotations/min while the plants were illuminated. The spectrum of the LED lamp was the same of the two LED lamps of the comparative example and in a spectral region of wavelengths from 380 to 800 nm.

21 days after implanting the seeds, the plants have had a yield in form of a total fresh weight of 800 g.

Under the same spectral irradiance from 380 to 800nm being provided a single rotating LED lamp produced more than three times the fresh weight yield of lettuce compared to two parallel static lamps, wherein all lamps have been operated at the identical distance from the plant holding device and plant growing conditions like temperature, humidity etc. have been the same.

### List of reference numbers:

- A: rotational axis
- A1: further rotational axis
- LB: light beam
- P: plant
- 1: plant holding device
- 10: plant growing trajectory
- 11: plant holding element
- 12: outer edge
- 2: lighting device
- 21: LED lamp
- 211: LED
- 22: outer edge
- 23: sensor
- 3: container
- 4: airflow device

## Claims

1. A method for affecting plant growth, comprising steps of
- irradiating plants (P) during a lighting period having a start period and an end period using light beams (LB) emitted by a lighting device (2) having a plurality of LED (light emitting diode) lamps (21) emitting plant sensitive emission wavelength ranges and having separately adjustable emission intensity,
- increasing the emission intensity stepwise and/or continuously during the start period and
- decreasing the emission intensity stepwise and/or continuously during the end period,
**characterized in that**
- relative to each other said lighting device (2) and the plants (P) are moved in an at least in part rotary movement while the plants (P) are illuminated.

2. The method according to claim 1, **characterized by** moving said lighting device (2) with a rotation speed of 0,25 to 5,0 full rotations/min, preferably, 0,5 to 3,0 full rotations/min, more preferably 0,75 to 1,5 full rotations/min.

3. The method according to claim 1 or claim 2 **characterized in that** said emission wavelength ranges of said LED lamps (21) are selected depending on a growing stage of a respective plant (P) to be irradiated.

4. The method according to claim 3, **characterized in that** said different emission wavelength ranges of said light beams (LB) are selected from wavelength ranges of blue light, red light, green light, far red light and/or ultraviolet light.

5. The method according to claim 4, **characterized in that** the higher said growing stage of a plant (P), the higher is an amount of red light emission wavelength range of said light beam (LB) and the lower is an amount of blue light emission wavelength range of said light beam (LB).

6. The method according to one of the claims 3 to 5, **characterized in that** the plants are moved along determined plant growing trajectories (10) during the according plant growing cycle, the plant growing trajectories (10) showing different plant growing stage sections, wherein LED lamps (21) passing above specific growing stage sections are emitting emission wavelength ranges selected in dependency on the growing stage of the plants in the growing stage sections.

7. The method according to one of the preceding claims, **characterized by** a step of using an airflow device (4) to blow a plant-airflow on at least some of the plants (P) causing a plant movement by said plant airflow.

8. The method according to one of the preceding claims, **characterized by** a step of using an airflow device (4) to blow a lighting-device-airflow on said lighting device (2) for generating or supporting said at least in part rotary movement of said lighting device (2).

9. The method according to claim 7 and 8, **characterized in that** the plant airflow and the lighting device airflow are produced by a common airflow device (4).

10. A plant growing system for affecting plant growth by light, comprising:
- a plant holding device (1), and
- a lighting device (2) having a plurality of LED (light emitting diode) lamps (21) emitting plant sensitive emission wavelength ranges and having separately adjustable emission intensities,
**characterized in that**
said lighting device (2) is arranged and adapted to move in an at least in part rotary movement on top of said plant holding device (1) and said lighting device (2) is having LED lamps (21) showing different emission wavelength ranges.

11. The plant growing system according to claim 10, **characterized in that** said LED lamps (21) are attached in a manually mountable and dismountable manner to the lighting device (2).

12. The plant growing system according to one of claims 10 or 11, **characterized in that** said lighting device (2) is movable around a rotational axis (A) seen from this rotational axis (A) said LED lamps (21) are arranged radially.

13. The plant growing system according to claim 12, **characterized in that** said plant holding device (1) has plant holding elements (11) each adapted to receive one or several plants (P), wherein the plant holding elements (11) are movable by the plant growing system along plant growing trajectories (10) during a plant growing cycle by a rotary movement around a further rotational axis (A1).

14. The plant growing system according to claim 13, **characterized in that** the LED lamps (21) show a plant sensitive emission spectrum changing radially according to a plant growing cycle following the plant growing trajectories (10).

15. The plant growing system according to one of claims 10 to 14, **characterized in that** said lighting device (2) comprises at least one sensor (23) selected from the group consisting of temperature sensor, humidity sensor, camera and/or ultrasonic sensor.
